# EUROPEAN PATENT APPLICATION

(11) **EP 4 852 200 A1**
(43) Date of publication of application: **09.12.2026**
(21) Application number: 25748376.8
(22) Date of filing: 17.01.2025
(51) Int. Cl.: H01M 50/503, H01M 50/50, H01M 50/204, H01M 50/213, H01M 50/284, H01M 50/293, H01M 50/296, H01M 50/514, H01M 50/519, H01M 50/583

(54) **BATTERY PACK, LEAD PLATE FOR BATTERY PACK, AND METHOD FOR MANUFACTURING BATTERY PACK**

(30) Priority: 31.01.2024 JP 2024013415
(71) Applicant: Panasonic Intellectual Property Management Co., Ltd., Kadoma-shi, Osaka 571-0057 (JP)
(72) Inventor: HIRANO, Tatsuya, Kadoma-shi, Osaka 571-0057 (JP); MATSUSHITA, Fumiya, Kadoma-shi, Osaka 571-0057 (JP); NAITO, Atsushi, Kadoma-shi, Osaka 571-0057 (JP); SUMI, Tatsuya, Kadoma-shi, Osaka 571-0057 (JP); NORIMINE, Shota, Kadoma-shi, Osaka 571-0057 (JP)
(74) Representative: Eisenführ Speiser
(86) International application number: PCT/JP2025/001410
(87) International publication number: WO 2025/164380

(57) **Abstract**

A battery pack includes a plurality of secondary battery cells, one or more first lead plates that connect the plurality of secondary battery cells in series or in parallel, a circuit board connected to the one or more first lead plates, and an outer case housing a battery block in which the plurality of secondary battery cells are connected by the one or more first lead plates, and the circuit board. The first lead plate includes a lead body extending in one direction, and an output portion that is at an edge of the lead body and is bent at a bending line. The lead body and the output portion include one or more bead portions that are discontinuous across the bending line and are formed along an extension direction.

## Description

### TECHNICAL FIELD

The present disclosure relates to a battery pack, a lead plate for a battery pack, and a method for manufacturing a battery pack.

### BACKGROUND ART

Battery packs that house rechargeable secondary battery cells such as lithium-ion secondary batteries inside outer cases and drive electric devices are used in various applications (for example, Patent Literature 1 and 2).

In such a battery pack, a plurality of secondary battery cells are connected in series or in parallel via lead plates, and are further connected to a circuit board or the like. In order to connect the lead plates and the circuit board, in an assembly step of the battery pack, in a state in which the lead plates are welded to a battery module in which a plurality of secondary batteries are held by a battery holder, an operator manually bends the lead plates and connects the lead plates to the circuit board.

However, when an operator attempts to manually bend and connect a lead plate, variation may occur depending on the operator. For example, a bending position may shift depending on the operator, or an external force may be applied to the lead plate, causing the lead plate to curve at a location other than a bending portion, and an outer shape may become large, causing a problem.

On the other hand, when a battery pack is assembled in a state in which the lead plate has been bent in advance, it is conceivable to slide and assemble the circuit board from a lateral direction. However, in order to enable such assembly, restrictions arise in procedures, directions, and the like when assembling the circuit board and the battery module, and there is a problem that such assembly cannot necessarily be adopted depending on a configuration of the battery pack.

### Citation List

### Patent Literature

Patent Literature 1: Japanese Translation of PCT International Application Publication No. 2016-514344
Patent Literature 2: Japanese Patent No. 7,295,096

### SUMMARY OF INVENTION

One problem of the present disclosure is to provide a battery pack, a lead plate for a battery pack, and a method for manufacturing a battery pack in which bending of a lead plate is facilitated even manually. Another problem is to provide a battery pack, a lead plate for a battery pack, and a method for manufacturing a battery pack in which curving of a lead plate is prevented. The description of these objects and problems of the present disclosure does not preclude the existence of other objects and problems. In addition, one aspect of the present disclosure does not need to solve all of these problems. Further, problems other than these can be extracted from the description of the specification, drawings, and claims of the present disclosure.

A battery pack according to one aspect of the present disclosure is a battery pack including: a plurality of secondary battery cells; one or more first lead plates configured to connect the plurality of secondary battery cells at least in series or in parallel; a circuit board connected to the first lead plate; and an outer case housing the circuit board and a battery block in which the plurality of secondary battery cells are connected to each other by the one or more first lead plates. Each of the one or more first lead plates includes a lead body extending in one direction, and an output portion bent along a bending line at an edge of the lead body. The each of the one or more first lead plates includes one or more bead portions, discontinuous across the bending line between the lead body and the output portion, being arranged in the lead body and the output portion along the one direction.

A lead plate for a battery pack according to another aspect of the present disclosure is a lead plate for a battery pack, the lead plate being for connecting a plurality of secondary battery cells. The lead plate includes a lead body extending in one direction, and an output portion formed integrally with the lead body via a bending line at an edge of the lead body. One or more portions, discontinuous across the bending line between the lead body and the output portion, being arranged along the one direction.

Further, a method for manufacturing a battery pack according to another aspect of the present disclosure is a method for manufacturing a battery pack that includes a plurality of secondary battery cells, one or more first lead plates configured to connect the plurality of secondary battery cells in series or in parallel, a circuit board connected to the one or more first lead plates, and an outer case housing the circuit board and a battery block in which the plurality of secondary battery cells are connected by the one or more first lead plates. The method includes: forming the battery block by connecting the plurality of secondary battery cells with the one or more first lead plates, each of the one or more first lead plates including a lead body extending in one direction and an output portion formed integrally with the lead body via a bending line at an edge of the lead body, wherein, in the each of the one or more first lead plates, the lead body and the output portion include one or more bead portions that are discontinuous across the bending line and formed along the one direction of the lead body and the output portion; placing the circuit board on one surface of the battery block in a state in which the output portion extends in a planar shape from the lead body from the one surface of the battery block; and bending the output portion at the bending line and connecting the output portion to the circuit board.

According to the battery pack according to one aspect of the present disclosure, the first lead plate can be easily bent at the bending line. Further, as a result of reinforcement by the bead portion formed along the extension direction of the lead body, a situation in which the lead body curves even when the output portion is bent can be suppressed.

### BRIEF DESCRIPTION OF DRAWINGS

[FIG. 1] FIG. 1 is a perspective view showing a battery pack according to a first embodiment.
[FIG. 2] FIG. 2 is a perspective view of the battery pack of FIG. 1 seen from a rear side.
[FIG. 3] FIG. 3 is a cross-sectional view taken along line III-III in FIG. 1.
[FIG. 4] FIG. 4 is a cross-sectional view taken along line IV-IV in FIG. 1.
[FIG. 5] FIG. 5 is an exploded perspective view of an outer case of the battery pack of FIG. 1.
[FIG. 6] FIG. 6 is a perspective view of an inner bag of FIG. 5 seen from a rear surface.
[FIG. 7] FIG. 7 is a plan view of the inner bag of FIG. 6.
[FIG. 8] FIG. 8 is a developed view of a protective sheet of FIG. 6.
[FIG. 9] FIG. 9 is an exploded perspective view of the inner bag of FIG. 5.
[FIG. 10] FIG. 10 is an exploded perspective view in which a battery module is taken out from the inner bag of FIG. 9.
[FIG. 11] FIG. 11 is an exploded perspective view of the battery module of FIG. 10.
[FIG. 12] FIG. 12 is an exploded perspective view of the battery module of FIG. 11 seen from a rear side.
[FIG. 13] FIG. 13 is a perspective view showing a state before an output portion of a first lead plate of FIG. 11 is bent.
[FIG. 14] FIG. 14 is a perspective view showing a state in which the output portion of the first lead plate of FIG. 13 is bent.
[FIG. 15] FIG. 15 is a perspective view of the first lead plate of FIG. 14 seen from a left side.
[FIG. 16] FIG. 16 is an exploded perspective view showing a state in which a circuit board is attached to a battery module.
[FIG. 17] FIG. 17 is a perspective view showing a manner in which an output portion of a first lead plate of FIG. 16 is bent.
[FIG. 18] FIG. 18 is a perspective view showing a state in which the output portion is bent from the state of FIG. 17.
[FIG. 19] FIG. 19 is a plan view showing a vicinity of a bending line of a first lead plate of a battery pack according to a second embodiment.
[FIG. 20] FIG. 20 is a plan view showing a vicinity of a bending line of a first lead plate of a battery pack according to a third embodiment.

### DESCRIPTION OF EMBODIMENTS

Aspects of the present disclosure may be specified by the following configurations and features.

In the battery pack according to another aspect of the present disclosure, in the above aspect, each of the one or more bead portions include a body-side bead located in the lead body and an output-side bead located in the output portion, and the body-side bead and the output-side bead are separated at the bending line and are arranged linearly. With the above configuration, an advantage is obtained in that a space between the body-side bead and the output-side bead is easily bent and positioning of the bending line can be easily performed.

In the battery pack according to another aspect of the present disclosure, in any of the above aspects, the one or more bead portions include a pair of bead portions arranged in parallel along the one direction. With the above configuration, a discontinuous portion defined by being separated by the pair of bead portions sandwiches a periphery of the bending line at four locations, and a bending position can be stably defined.

Further, in the battery pack according to another aspect of the present disclosure, in any of the above aspects, the each of the one or more first lead plates include a recess spanning the lead body and the output portion, the recess being located along the bending line. With the above configuration, when bending the first lead plate along the bending line, the bending position can be positioned using the recess as a guide.

Furthermore, in the battery pack according to another aspect of the present disclosure, in any of the above aspects, the each of the one or more first lead plates further includes a cell connection portion connected to the lead body via a second bending line and the cell connection portion is connected to corresponding secondary battery cells among the plurality of secondary battery cells, and the lead body and the cell connection portion are bent in advance via the second bending line. With the above configuration, the bending line is guided using the bead portion, whereby variation is suppressed even when an operator manually bends the first lead plate, while the second bending line is bent in advance using a machine or the like, whereby a guide function can be made unnecessary, and a first lead plate considering accuracy variation between manual work and machine work can be realized.

Furthermore, in the battery pack according to another aspect of the present disclosure, in any of the above aspects, an extension line of the bending line and an extension line of the second bending line intersect each other.

Furthermore, in the battery pack according to another aspect of the present disclosure, in any of the above aspects, the battery block includes a battery holder accommodating the plurality of secondary battery cells and a board holder holding the circuit board, and the output portion is connected to an overall positive terminal or overall negative terminal of the battery block on the board holder.

Furthermore, the battery pack according to another aspect of the present disclosure, in any of the above aspects, further includes one or more second lead plates mechanically connected to cell end surfaces of corresponding secondary battery among the plurality of secondary battery cells, each of the one or more second lead plates not including the output portion.

Furthermore, the battery pack according to another aspect of the present disclosure, in any of the above aspects, further includes a third lead plate that does not include the output portion, and a current fuse portion connected to the third lead plate. The board holder is installed on the battery holder, the current fuse portion has a first end connected to the third lead plate and fixed to the battery holder, and a second end fixed to the board holder, and the third lead plate is connected to an overall negative terminal or overall positive terminal of the battery block on the board holder. With the above configuration, the output portion can be made unnecessary in the third lead plate.

Furthermore, the battery pack according to another aspect of the present disclosure, in any of the above aspects, further includes a waterproof inner bag housing the battery block. With the above configuration, by suppressing, by the bead portion, a situation in which the lead body curves when the first lead plate is bent, a situation can be avoided in which the curved first lead plate of the battery block housed in the inner bag breaks the inner bag.

Furthermore, in the method for manufacturing a battery pack according to another aspect of the present disclosure, in any of the above aspects, in forming the battery block, the each of the one or more first lead plates includes a cell connection portion that is connected to the lead body via a second bending line and is connected to the plurality of secondary battery cells, and the lead body and the cell connection portion are bent in advance via the second bending line. Accordingly, the bending line is guided using the bead portion, whereby variation is suppressed even when an operator manually bends the first lead plate, while the second bending line is bent in advance using a machine or the like, whereby a guide function can be made unnecessary, and a first lead plate considering accuracy variation between manual work and machine work can be realized.

Hereinafter, embodiments of the present disclosure will be described based on the drawings. However, the embodiments shown below are examples for embodying the technical idea of the present disclosure, and the present disclosure is not limited to the following. In addition, the present specification by no means specifies members shown in the claims as members of the embodiments. In particular, unless particularly specifically described, dimensions, materials, shapes, relative arrangements, and the like of components described in the embodiments are not intended to limit the scope of the present disclosure only thereto, and are merely explanatory examples. The sizes, positional relationships, and the like of members shown in the drawings may be exaggerated in order to clarify the explanation. Furthermore, in the following description, the same names and reference marks indicate the same or equivalent members, and detailed descriptions will be omitted as appropriate. Furthermore, the elements constituting the present disclosure may be configured in an aspect in which a plurality of elements are constituted by the same member and one member serves as the plurality of elements, or conversely, a function of one member may be realized by being shared by a plurality of members.

The battery pack of the present disclosure can be used as a drive power source for a moving body such as an electric cart, an electric scooter, or a power-assisted bicycle, as a power source for a portable electric device such as a wireless device, an electric cleaner, or an electric tool, in a stationary power storage application as a backup power source for a server or as a power supply device for household use, business-office use, or factory use, and further as a drive power source for a vehicle such as a hybrid vehicle or an electric automobile. Hereinafter, as one embodiment of the present invention, a battery pack used as a drive power source for an electric motorcycle will be described.

### [First embodiment]

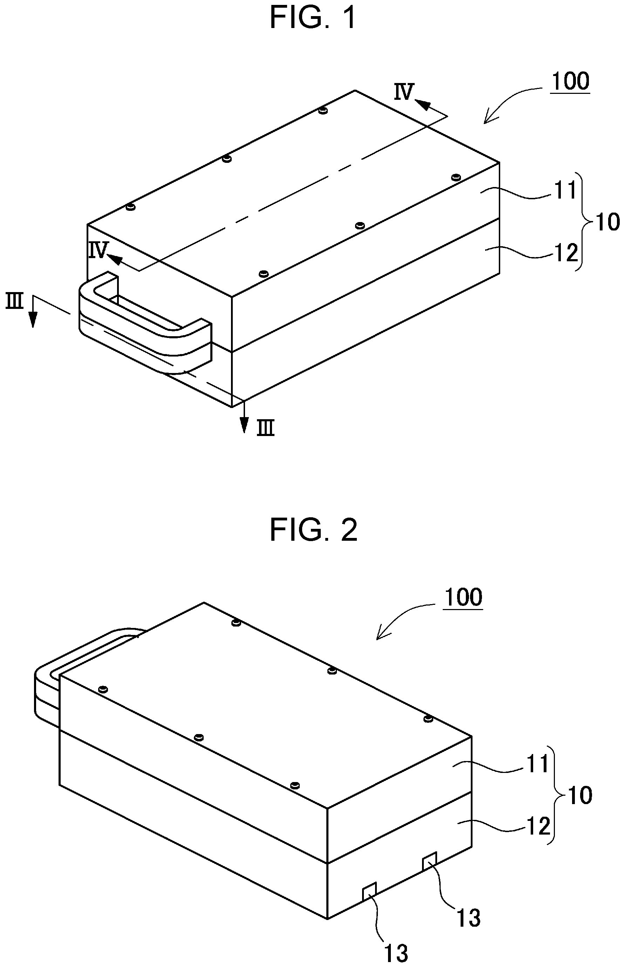

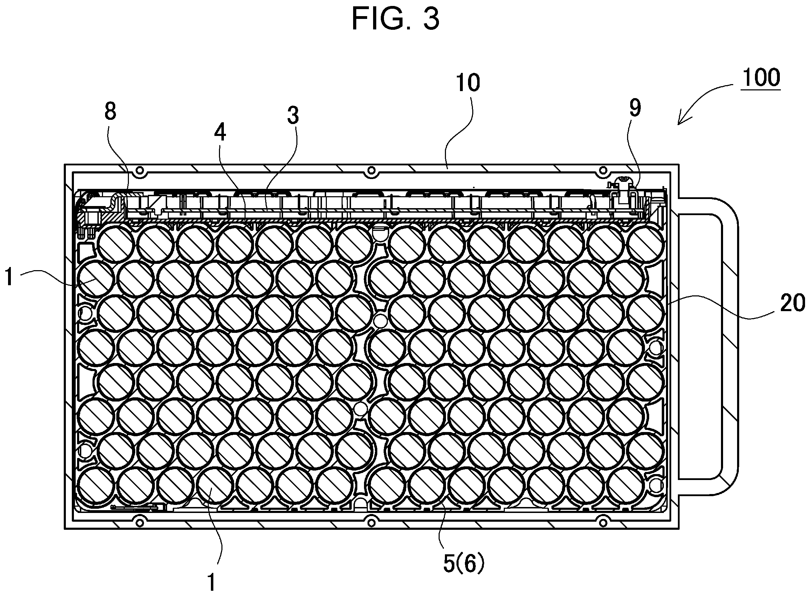

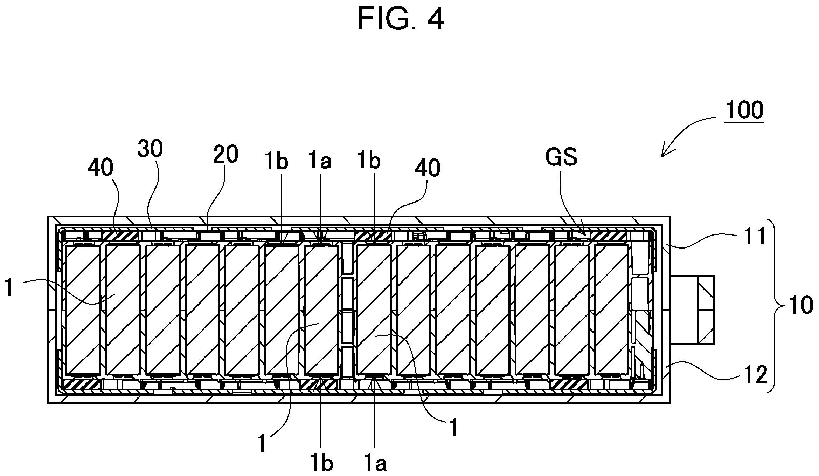

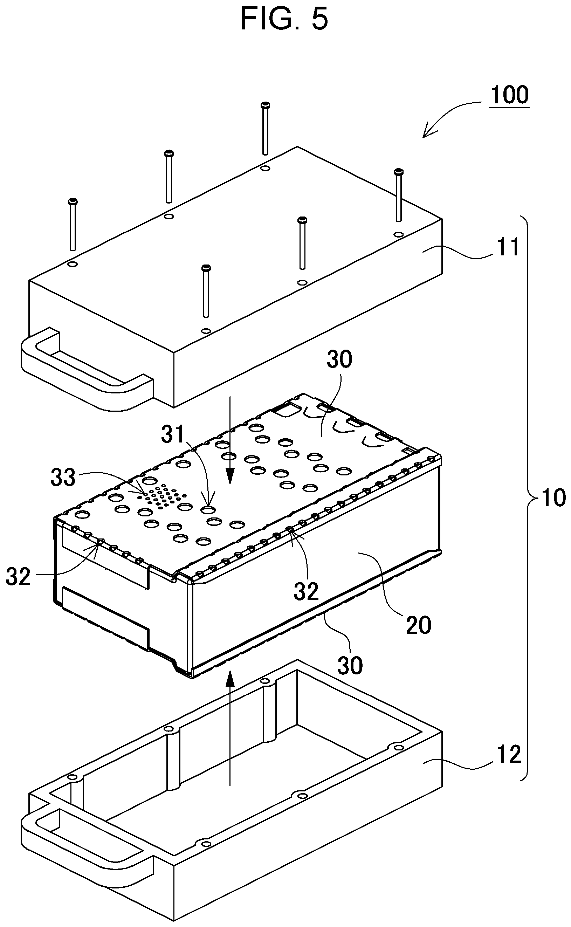

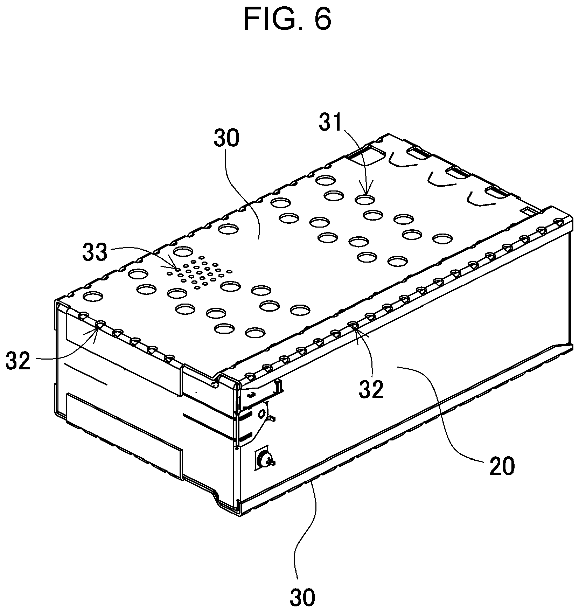

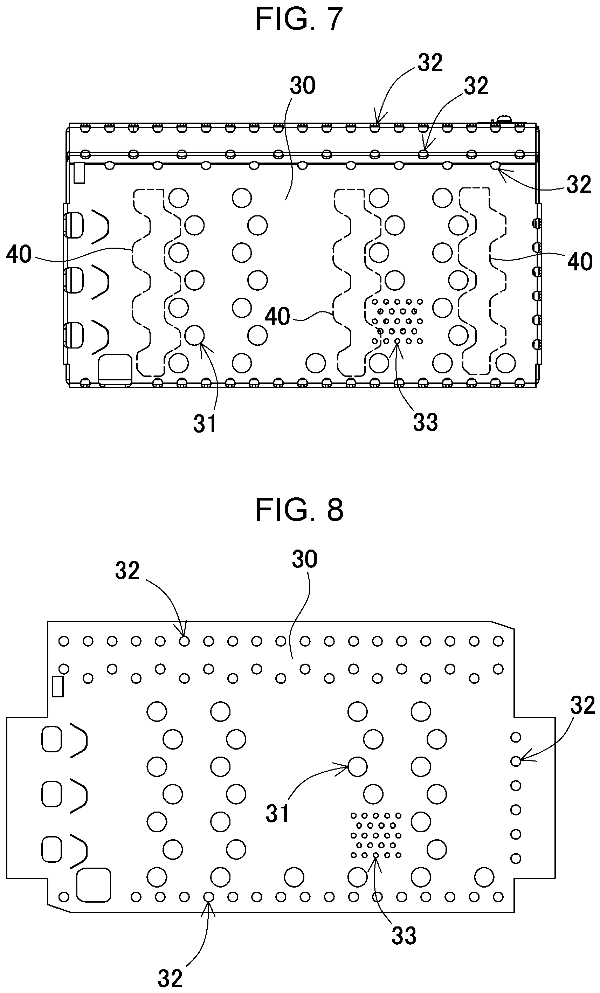

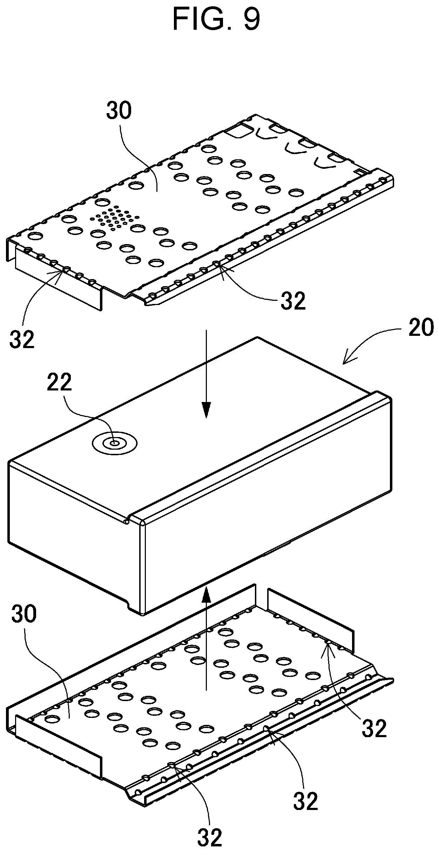

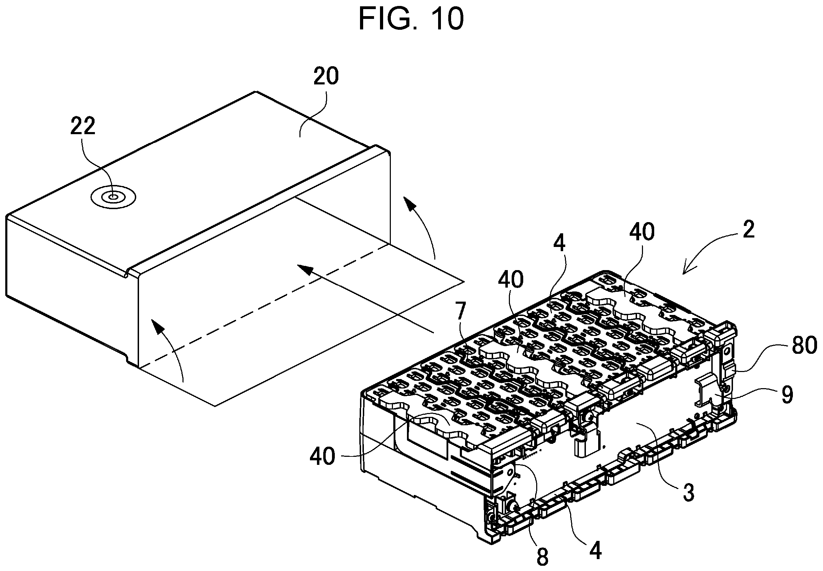

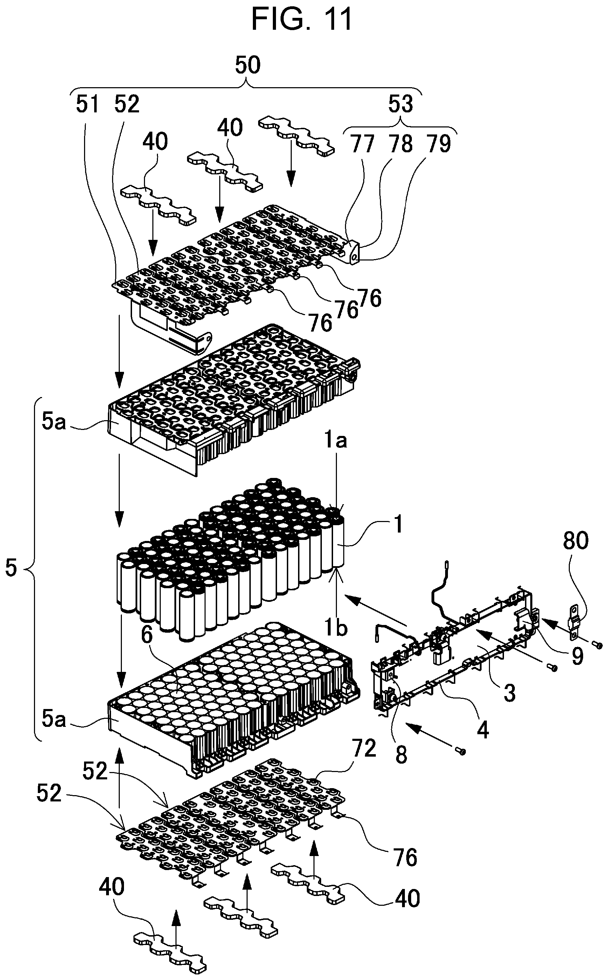

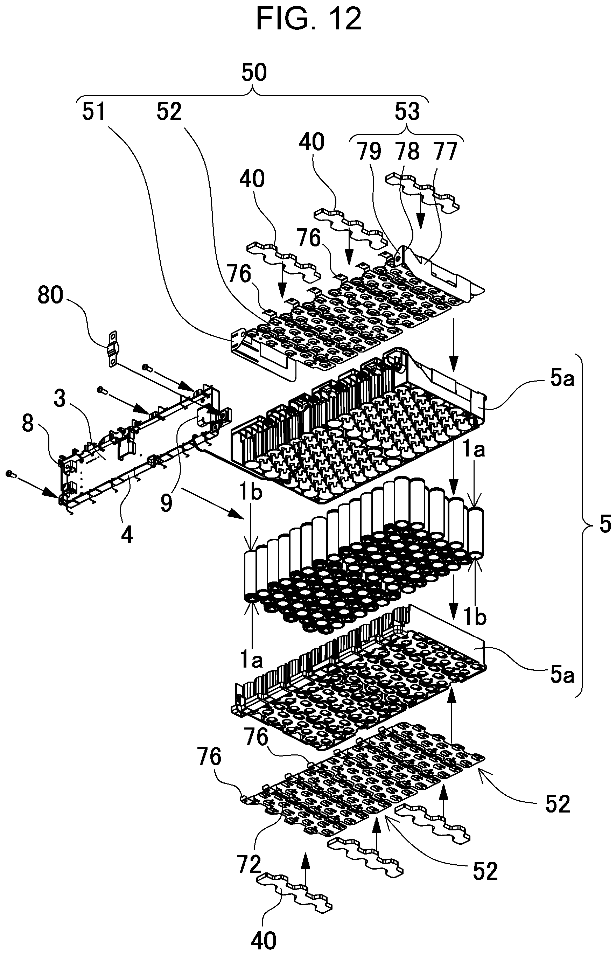

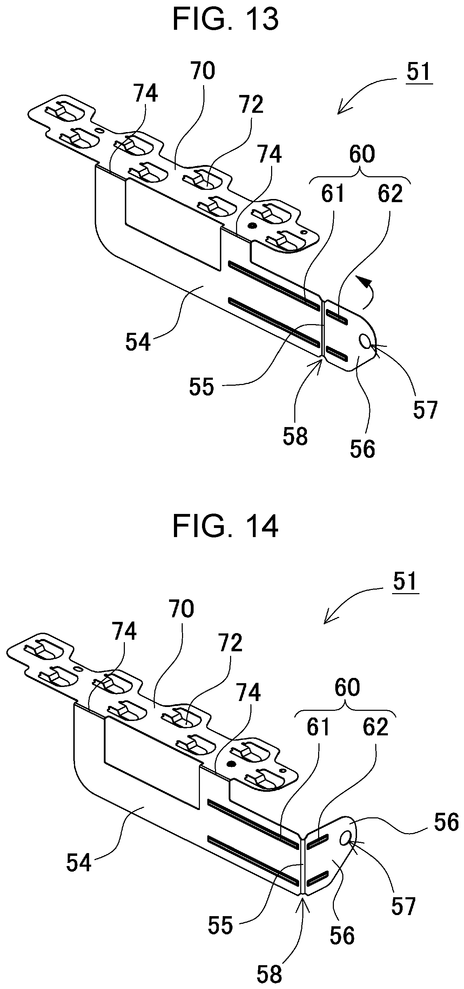

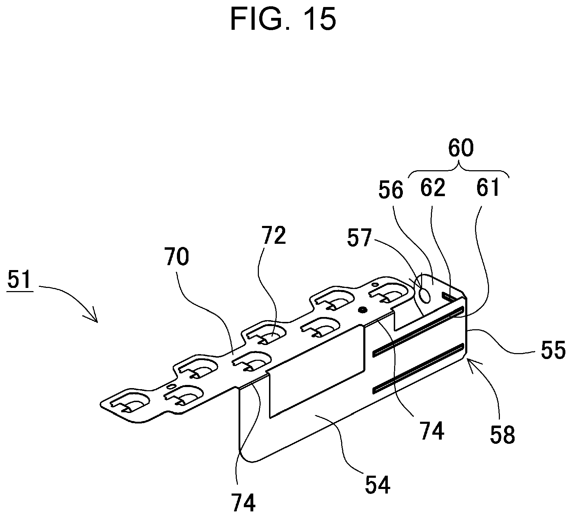

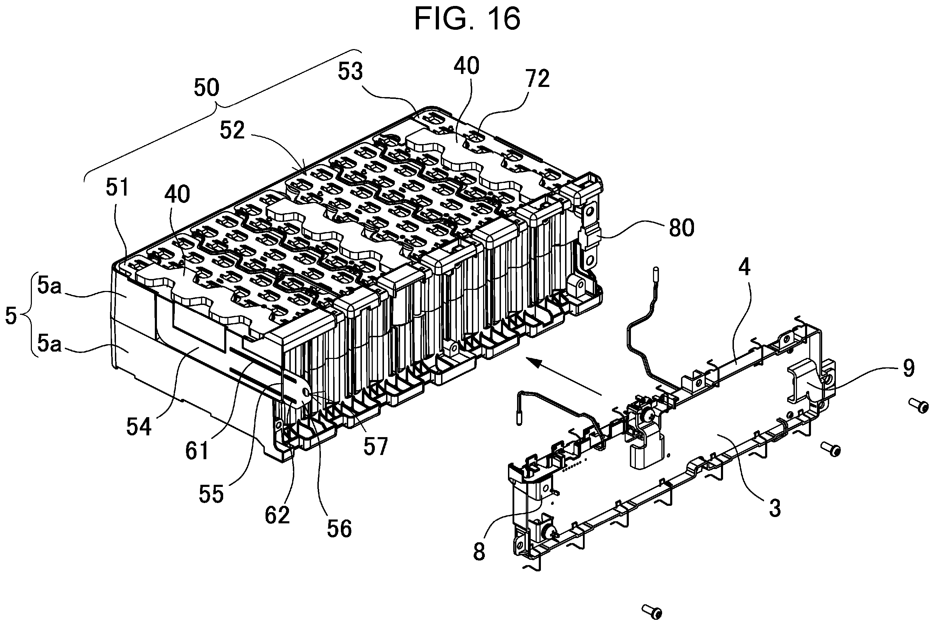

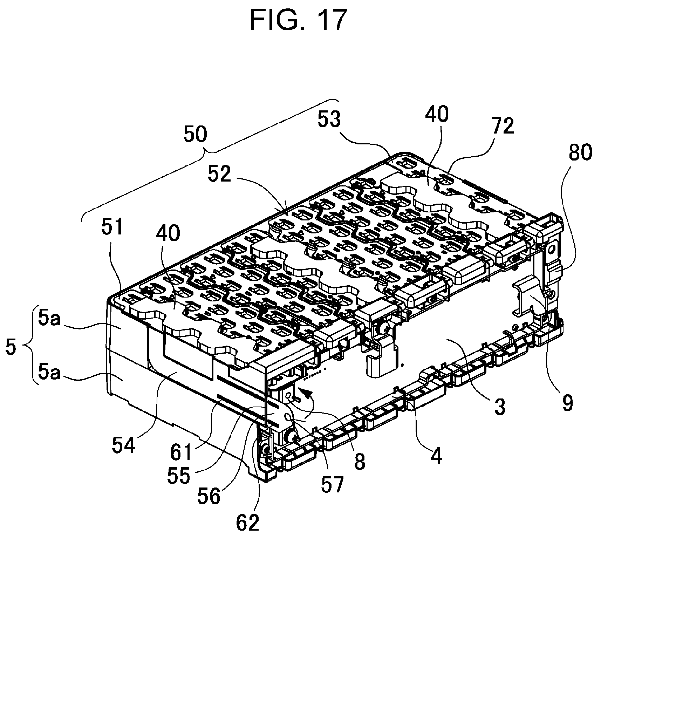

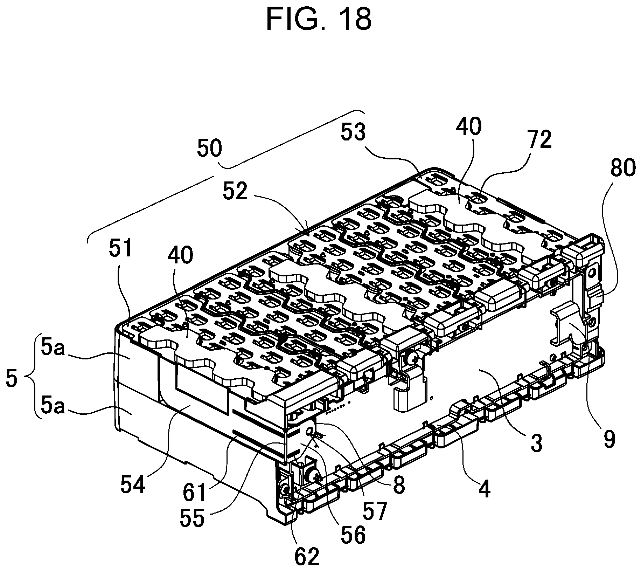

Battery pack 100 according to the first embodiment of the present disclosure is shown in FIGS. 1 to 18. In these drawings, FIG. 1 is a perspective view showing battery pack 100 according to the first embodiment, FIG. 2 is a perspective view of battery pack 100 of FIG. 1 seen from a rear side, FIG. 3 is a cross-sectional view taken along line III-III in FIG. 1, FIG. 4 is a cross-sectional view taken along line IV-IV in FIG. 1, FIG. 5 is an exploded perspective view of an outer case of battery pack 100 of FIG. 1, FIG. 6 is a perspective view of inner bag 20 of FIG. 5 seen from a rear surface, FIG. 7 is a plan view of inner bag 20 of FIG. 6, FIG. 8 is a developed view of the protective sheet of FIG. 6, FIG. 9 is an exploded perspective view of inner bag 20 of FIG. 5, FIG. 10 is an exploded perspective view in which battery module 2 is taken out from inner bag 20 of FIG. 9, FIG. 11 is an exploded perspective view of battery module 2 of FIG. 10, FIG. 12 is an exploded perspective view of battery module 2 of FIG. 11 seen from a rear side, FIG. 13 is a perspective view showing a state before output portion 56 of first lead plate 51 of FIG. 11 is bent, FIG. 14 is a perspective view showing a state in which output portion 56 of first lead plate 51 of FIG. 13 is bent, FIG. 15 is a perspective view of first lead plate 51 of FIG. 14 seen from a left side, FIG. 16 is an exploded perspective view showing a state in which circuit board 3 is attached to battery module 2, FIG. 17 is a perspective view showing a manner in which output portion 56 of first lead plate 51 of FIG. 16 is bent, and FIG. 18 is a perspective view showing a state in which output portion 56 is bent from the state of FIG. 17. Battery pack 100 shown in these drawings includes outer case 10 and inner bag 20.

### (Outer case 10)

Outer case 10 houses inner bag 20. An outer shape of outer case 10 may be any shape having a storage space inside. In examples shown in FIGS. 1 to 4 and the like, outer case 10 is formed in a box shape having an external appearance extending in one direction. Box-shaped outer case 10 is divided vertically or laterally into two parts, upper case 11 and lower case 12. Outer case 10 is preferably made of a member excellent in insulating property, for example, a resin such as polycarbonate or PC-ABS alloy. Outer case 10 may also be constituted by a metal member such as aluminum or an alloy thereof. In addition, an internal space for housing inner bag 20 is provided inside outer case 10 as shown in FIG. 5 and the like.

### (Inner bag 20)

Inner bag 20 covers an outer periphery of battery holder 5 inside outer case 10. Inner bag 20 has waterproof property and waterproofs secondary battery cells 1 housed in outer case 10. Therefore, inner bag 20 is made of a waterproof material.

Inner bag 20 is also made of a flexible material. In the examples of FIGS. 5 to 7, FIGS. 9 to 10, and the like, inner bag 20 is illustrated in a box shape, but is not necessarily limited to such a shape, and may have an indefinite shape such as a bag shape. For such inner bag 20, a resin excellent in heat resistance, flame retardance, flexibility, abrasion resistance, and the like can be used, and for example, a polyolefin-based resin, a polyethylene-based resin, for example, PET resin, or the like is used. In addition, a heat-shrinkable tube that shrinks by heat may be used.

Further, inner bag 20 includes check valve 22 that does not allow moisture from outside to pass while venting internal gas.

### (Protective sheet 30)

A surface of inner bag 20 is covered with protective sheet 30. In the examples of FIGS. 6 to 9, protective sheet 30 is attached to each of a pair of main surfaces of inner bag 20. Protective sheet 30 is configured to continuously cover a main surface of inner bag 20 and at least a part of a side surface continuous with the main surface. Accordingly, the surface of inner bag 20 is protected by protective sheet 30.

Protective sheet 30 is constituted by a member having elasticity. In this manner, by interposing inner bag 20 having elasticity between an outer surface of flexible inner bag 20 and an inner surface of hard outer case 10, inner bag 20 and battery module 2 housed in inner bag 20 can be protected. Specifically, inner bag 20 and battery module 2 can be protected from an external force such as impact or vibration. In addition, a situation in which flexible inner bag 20 is rubbed and broken by impact, vibration, or the like can be suppressed. Protective sheet 30 is constituted by an insulating member, for example, a rubber sheet having heat resistance and flame retardance. Preferably, a CR (chloroprene rubber)-based rubber sheet can be used.

### (Battery module 2)

As shown in FIGS. 3 to 4 and FIG. 10, battery module 2 is housed inside inner bag 20. Battery module 2 is also referred to as a core pack or the like, and is constituted by a battery block housing a plurality of secondary battery cells 1 and circuit board 3. In addition, spacer member 40 is attached to a surface of battery module 2 as shown in FIGS. 10 to 12 and the like.

The battery block is constituted by battery holder 5. Battery holder 5 is divided into a plurality of sub-holders 5a and sandwiches secondary battery cells 1. In the examples of FIGS. 3 to 4 and FIGS. 11 to 12, a large number of cylindrical secondary battery cells 1 are accommodated in battery holder 5 in an upright posture and are held. The plurality of secondary battery cells 1 are connected in series or in parallel via lead plates 50 and the like. The number of series connections and the number of parallel connections can be set arbitrarily according to required specifications. In the examples of FIGS. 11 to 12, 112 secondary battery cells 1 are used in battery module 2 to provide 14 series × 8 parallel, but the configuration is not limited thereto. Battery module 2 may be constituted by a plurality of battery blocks, and a plurality of secondary battery cells 1 may be accommodated in each battery block.

Battery holder 5 includes a plurality of accommodation tubes 6 that individually accommodate secondary battery cells 1. In the examples of FIGS. 11 to 12, battery holder 5 is divided into upper and lower parts, and secondary battery cells 1 are accommodated so as to be sandwiched from above and below by the divided accommodation tubes 6. The number of divisions of the battery holder is not limited to two, and may be three or more. In addition, battery holder 5 can be constituted by a resin excellent in insulating property such as polycarbonate.

### (Secondary battery cell 1)

Each of secondary battery cells 1 may be a cylindrical or prismatic secondary battery cell in outer shape. In the examples shown in FIGS. 3 to 4, FIGS. 11 to 12, and the like, cylindrical secondary battery cells 1 are used in an upright posture and arranged in a staggered pattern. The number and arrangement of secondary battery cells 1 are not limited to this example, and any number or arrangement can be adopted as appropriate. For example, cylindrical secondary battery cells may be arranged in a matrix pattern.

Each secondary battery cell 1 has positive and negative electrodes. The positive and negative electrodes are preferably provided on one end surface of secondary battery cell 1. For secondary battery cell 1, a known secondary battery such as a lithium-ion secondary battery, a nickel-metal hydride battery, or a nickel-cadmium battery can be used as appropriate.

### (Gas discharge valve)

A gas discharge valve is provided in each outer can of secondary battery cells 1. The gas discharge valve opens in response to an increase in internal pressure of the outer can, and releases gas inside the outer can to the outside. The gas discharge valve is provided on one of cell end surfaces of secondary battery cell 1. In the examples shown in FIGS. 11 to 12 and the like, the gas discharge valve is provided on a positive electrode side of secondary battery cell 1.

### (Gas discharge port 13)

On the other hand, outer case 10 has gas discharge port 13 formed in a part thereof for releasing high-pressure gas to the outside when the gas discharge valve of secondary battery cell 1 is opened and the high-pressure gas is discharged. In the example of FIG. 2, gas discharge port 13 is provided on a rear side of lower case 12 of outer case 10. In these examples, gas discharge port 13 is rectangular, but the shape of gas discharge port 13 is not limited to a rectangular shape, and may be a polygonal shape such as an octagonal shape, a hexagonal shape, or a quadrangular shape, a circular shape, a track shape, an elliptical shape, or the like.

Lead plate 50 is arranged on a side surface of battery holder 5. Battery holder 5 includes guide wall 7 for positioning a position at which lead plate 50 is fixed to the side surface.

### (Lead plate 50)

Lead plate 50 connects electrodes on end surfaces of secondary battery cells 1 to each other to connect the plurality of secondary battery cells 1 in series or in parallel. In the examples of FIGS. 11 to 12 and the like, end surfaces of 112 secondary battery cells 1 are connected to each other by lead plates 50, and secondary battery cells 1 are connected in 14 series × 8 parallel. The number of secondary battery cells, the arrangement, the numbers of series and parallel connections, and the like are not limited to this example, and any number or arrangement can be adopted as appropriate. Each of these lead plates 50 is constituted by a metal plate excellent in conductivity such as an aluminum plate or a nickel plate.

An insulating plate may be arranged on an end surface of lead plate 50. The insulating plate is formed to a size that covers the entire surface of lead plate 50. In addition, electrode windows are partially opened so as to expose electrode portions of lead plate 50. Such an insulating plate is constituted by a material that is excellent in insulating property and fire resistance such as mica.

### (Circuit board 3)

As shown in FIGS. 11 to 12 and the like, battery module 2 is connected to circuit board 3 via lead plate 50. Circuit board 3 has mounted thereon a charge-discharge circuit that charges and discharges secondary battery cells 1, a protection circuit that monitors voltage and temperature of secondary battery cells 1 and cuts off current during abnormality, and the like. Circuit board 3 is constituted by a glass epoxy board or the like. In addition, board holder 4 that holds such circuit board 3 may be provided. In battery module 2 shown in FIGS. 11 to 12 and the like, the battery block includes battery holder 5 accommodating the plurality of secondary battery cells 1 and board holder 4 holding circuit board 3 provided with overall electrode terminals of battery pack 100, namely overall negative terminal 8 and overall positive terminal 9, and is constituted by installing board holder 4 on battery holder 5.

### (Current fuse portion 80)

Current fuse portion 80 is a safety element that fuses in response to overcurrent. By providing current fuse portion 80 as a single element separately from fuse link 72 described later, safety of battery pack 100 is further enhanced. Current fuse portion 80 has one end fixed to battery holder 5 and connected to lead plate 50 on battery holder 5, and another end fixed to board holder 4 and connected to one of the overall electrode terminals on circuit board 3. In this manner, current fuse portion 80 is connected between lead plate 50 and overall negative terminal 8 or overall positive terminal 9 of battery pack 100. In the examples shown in FIG. 12 and FIGS. 16 to 18, current fuse portion 80 is connected to overall positive terminal 9.

### (First lead plate 51)

Lead plate 50 shown in FIGS. 11 to 12 includes first lead plate 51, second lead plate 52, and third lead plate 53. First, first lead plate 51 will be described.

### (Bending line 55)

First lead plate 51 includes lead body 54 extending in one direction, and output portion 56 that is at an edge of lead body 54 and is bent at bending line 55. Lead body 54 and output portion 56 include one or more bead portions 60 that are discontinuous across bending line 55 and formed along an extension direction. With such a configuration, first lead plate 51 can be easily bent at bending line 55. Further, as a result of reinforcement by bead portion 60 formed along the extension direction of lead body 54, a situation in which lead body 54 curves even when output portion 56 is bent can be suppressed.

When assembling a battery pack, in a state in which a first lead plate is welded to a battery module, an operator needs to manually bend the first lead plate and connect the first lead plate to a circuit board. At this time, when the operator attempts to manually bend and connect the first lead plate, variation may occur depending on the operator. For example, a position to be bent may shift depending on the operator or according to a production lot. In addition, an external force applied to the first lead plate may cause the first lead plate to curve at a location other than a bending portion, and an outer shape may become large, causing a problem.

In contrast, it is conceivable to assemble a battery pack in a state in which the first lead plate has been bent in advance. In this case, however, the circuit board needs to be slid and assembled from a lateral direction, and in order to enable such assembly, restrictions arise in procedures, directions, and the like when assembling the circuit board and the battery module. Therefore, there is a problem that such assembly cannot necessarily be adopted depending on the configuration of the battery pack.

Therefore, in the present embodiment, by regulating the bending position using bead portions 60 as described above, such variation can be suppressed and the position of bending line 55 can be controlled with high accuracy, whereby high-quality battery pack 100 can be realized.

In addition, by suppressing, by bead portion 60, a situation in which lead body 54 curves when first lead plate 51 is bent, a situation can be avoided in which curved first lead plate 51 of the battery block housed in inner bag 20 breaks inner bag 20.

### (Bead portion 60)

Lead body 54 and output portion 56 include one or more bead portions 60 that are discontinuous across bending line 55 and formed along the extension direction. In the examples shown in FIGS. 13 to 14 and the like, bead portion 60 is constituted by body-side bead 61 formed in lead body 54 and output-side bead 62 formed on an output portion 56 side. Body-side bead 61 and output-side bead 62 are arranged linearly and are separated at a portion of bending line 55. Accordingly, as shown in FIGS. 14 to 15 and the like, an advantage is obtained in that a space between body-side bead 61 and output-side bead 62 is easily bent and positioning of bending line 55 can be easily performed.

Bead portions 60 are preferably a pair of bead portions 60 formed in parallel along the extension direction. Accordingly, a discontinuous portion defined by being separated by the pair of bead portions 60 sandwiches the periphery of bending line 55 at four locations, and the bending position can be stably defined.

Further, bead portion 60 also contributes to reinforcement of lead plate 50. Body-side bead 61 is extended substantially over the entire surface along a longitudinal direction of lead body 54. Output-side bead 62 is also extended along output portion 56. By extending bead portion 60 in this manner, a resistance force is generated with respect to a direction intersecting bead portion 60, and a situation in which unnecessary stress is added during bending by manual bending and lead plate 50 curves into an unintended shape can be suppressed.

Each of bead portions 60 is formed by processing a surface of lead plate 50 into a convex strip or a recessed shape. Such bead portions 60 can be easily formed by press processing or the like. In addition, bead portions may be formed of a separate member made of metal or the like and added to a surface of a lead plate by welding or adhesion.

### (Cell connection portion 70)

First lead plate 51 shown in FIG. 13 includes lead body 54, output portion 56, and cell connection portion 70. Cell connection portion 70 is physically connected to the plurality of secondary battery cells 1 and connects the plurality of secondary battery cells 1 in series and/or in parallel. In the example of FIG. 13, cell connection portion 70 connects the plurality of secondary battery cells 1 in parallel. Therefore, cell connection portion 70 includes fuse links 72 for connection to cell end surfaces of secondary battery cells 1. When overcurrent is conducted to lead plate 50, fuse link 72 reacts to the overcurrent and is melted by Joule heat, thereby cutting off current conduction.

### (Output portion 56)

On the other hand, output portion 56 is connected to an overall positive terminal or overall negative terminal 8 of the battery block. In order to connect to overall positive terminal or overall negative terminal 8, connection hole 57 is opened in output portion 56. The examples of FIGS. 11 to 12 and FIG. 18 show an example connected to overall negative terminal 8.

### (Second bending line 74)

Cell connection portion 70 is connected to lead body 54 via second bending line 74. Lead body 54 and cell connection portion 70 are bent in advance via second bending line 74. With such a configuration, bending line 55 is guided using bead portion 60, whereby variation is suppressed even when an operator manually bends first lead plate 51, while second bending line 74 is bent in advance using a machine or the like, whereby a guide function can be made unnecessary, and first lead plate 51 accounting for accuracy variation in manual work and machine work can be realized.

An extension line of bending line 55 and an extension line of second bending line 74 intersect. By causing bending line 55 and second bending line 74 to intersect so as to move away from a parallel state in this manner, it is possible to avoid or suppress a situation in which, when manual bending is performed at bending line 55, unnecessary stress is transmitted to second bending line 74 that has already been bent. In the example of FIG. 13, the extension line of bending line 55 and the extension line of second bending line 74 are substantially orthogonal to each other.

### (Recess 58)

First lead plate 51 includes recess 58 formed to span lead body 54 and output portion 56 at an edge of bending line 55. That is, recesses 58 are formed at both ends of bending line 55. Accordingly, when bending first lead plate 51 along bending line 55, the bending position can be positioned using recesses 58 as guides.

### (Second lead plate 52)

Second lead plate 52 does not include an output portion. Each of second lead plates 52 is mechanically connected to cell end surfaces of the plurality of secondary battery cells 1 and connects the plurality of secondary battery cells 1 in series and/or in parallel. In the examples of FIGS. 11 to 12, second lead plate 52 connects the plurality of secondary battery cells 1 in parallel. So to speak, second lead plate 52 is constituted by cell connection portion 70 of first lead plate 51. In the examples of FIGS. 11 to 12, second lead plate 52 includes two rows of seven fuse links 72 connected to cell end surfaces, and connects a total of 14 secondary battery cells 1. On the other hand, cell connection portion 70 of first lead plate 51 includes seven fuse links 72 in one row. In the examples of FIGS. 11 to 12, battery module 2 includes six second lead plates 52 on an upper surface and seven second lead plates 52 on a lower surface. An edge of each second lead plate 52 includes intermediate connection portion 76 for connection to circuit board 3 and detecting an intermediate potential. Each intermediate connection portion 76 is bent in an L shape at an edge of second lead plate 52.

### (Third lead plate 53)

Third lead plate 53 is a member for connection to current fuse portion 80. Third lead plate 53 does not include output portion 56. On the other hand, third lead plate 53 has cell connection portion 70 similar to first lead plate 51, is mechanically connected to cell end surfaces of the plurality of secondary battery cells 1, and connects the plurality of secondary battery cells 1 in series and/or in parallel. In the examples of FIGS. 11 to 12, cell connection portion 70 of third lead plate 53 connects the plurality of secondary battery cells 1 in parallel. In addition to cell connection portion 70, third lead plate 53 includes third lead body 77 and fuse connection portion 79 for connection to current fuse portion 80. Third lead body 77 and fuse connection portion 79 are bent at third bending line 78. The bending of third bending line 78 is preferably not manual bending, and is preferably performed in advance by machine processing or the like. As shown in FIGS. 16 to 17, because of a configuration in which the other terminal of current fuse portion 80 is connected to circuit board 3 in a state in which fuse connection portion 79 is connected to current fuse portion 80 in advance, a mechanism for manual bending as in first lead plate 51 can be made unnecessary in third lead plate 53. By making manual bending unnecessary in this manner, a guide mechanism such as bead portion 60 can be made unnecessary for third bending line 78 as shown in FIG. 12.

Third lead plate 53 is connected to overall negative terminal 8 or overall positive terminal 9 of the battery block. In the examples of FIG. 12, FIGS. 16 to 18, and the like, third lead plate 53 is connected to overall positive terminal 9.

### [Second embodiment]

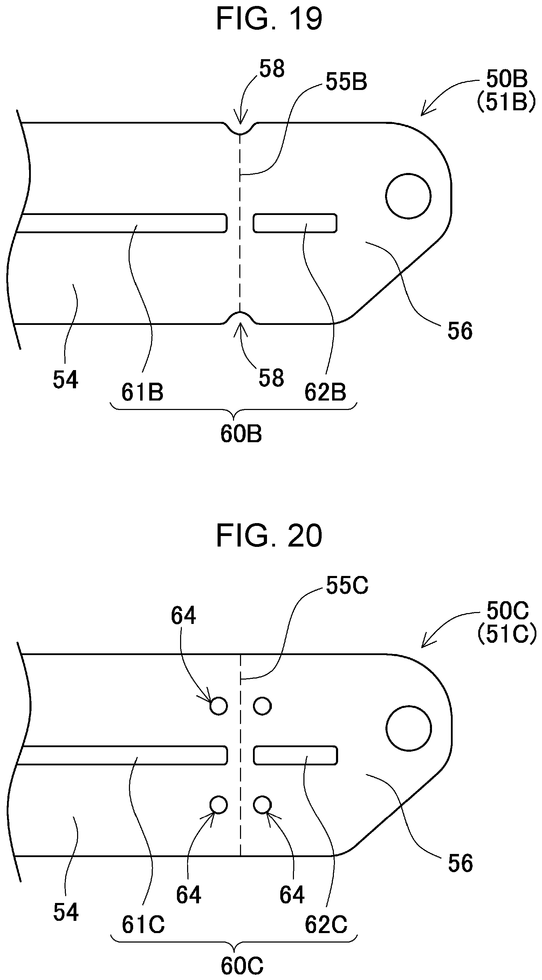

In the above first embodiment, the example in which two bead portions 60 are provided in parallel has been described. However, the present disclosure is not limited to this configuration, and three or more bead portions may be provided. Alternatively, one bead portion may be provided. Such an example is shown in an enlarged plan view of FIG. 19 as lead plate 50B of a battery pack according to a second embodiment. In this drawing, members similar to those in the first embodiment described above are denoted by the same reference marks, and detailed descriptions will be omitted as appropriate.

In first lead plate 51B of FIG. 19, only one bead portion 60B is extended in a longitudinal direction while forming a space with body-side bead 61B and output-side bead 62B being discontinuous at bending line 55B. In this case, bead portion 60B is preferably arranged substantially at the center in a width direction of lead body 54. Since there is only one space between body-side bead 61B and output-side bead 62B, recesses 58 are preferably formed on both sides of the bending portion in order to avoid bending line 55B becoming oblique during bending by manual bending.

### [Third embodiment]

In the above examples, the example in which the bead portions are linear has been described. However, the present disclosure does not limit the shape of the bead portions to a linear shape, and the bead portions may have any shape capable of defining a bending position, such as a dot-shaped, L-shaped, or V-shaped shape. For example, in lead plate 50C of a battery pack according to a third embodiment shown in FIG. 20, in first lead plate 51C, dot-shaped bead portions 64 are added above and below opposing end portions between body-side bead 61C and output-side bead 62C constituting linear bead portion 60C. Addition of such bead portions 64 makes it easier to define bending line 55C in a direction perpendicular to bead portion 60C, and can contribute to improving accuracy during manual bending and stabilizing quality.

### [Method for manufacturing battery pack]

Here, a method for manufacturing battery pack 100 will be described below. First, the plurality of secondary battery cells 1 are connected by first lead plate 51 to form battery module 2. First lead plate 51 includes lead body 54 extending in one direction, and output portion 56 integrally formed via bending line 55 at an edge of lead body 54. Lead body 54 and output portion 56 include one or more bead portions 60 that are discontinuous across bending line 55 and formed along the extension direction. Lead body 54 and cell connection portion 70 of first lead plate 51 are preferably bent in advance via second bending line 74 by machine processing or the like.

Next, as shown in FIG. 16, circuit board 3 is placed on one surface of battery module 2 in a posture in which, from the one surface of battery module 2, output portion 56 is extended in a planar shape from lead body 54.

Then, as shown in FIG. 17, output portion 56 is bent at bending line 55 and connected to circuit board 3. Lead body 54 and output portion 56 form discontinuous bead portions 60 with bending line 55 interposed therebetween, and therefore first lead plate 51 can be easily manually bent at bending line 55. Further, as a result of reinforcement by bead portions 60 formed along the extension direction of lead body 54, a situation in which lead body 54 curves even when output portion 56 is bent can be suppressed. In this manner, battery module 2 shown in FIG. 18 is obtained.

### (Spacer member 40)

Spacer member 40 is provided on a side surface of battery holder 5. Spacer member 40 is interposed between outer case 10 and battery module 2. As shown in FIG. 4, a space is formed by spacer member 40 between an inner surface of outer case 10 and a side surface of battery holder 5. This space functions as gas discharge space GS for discharging gas released from the gas discharge valve. Spacer member 40 is constituted by a member having heat resistance. Accordingly, even if high-temperature, high-pressure gas is discharged from the gas discharge valve, spacer member 40 is prevented from being immediately melted by high heat, and gas discharge space GS can be secured. For such spacer member 40, a CR (chloroprene rubber)-based rubber can be used.

Spacer member 40 is also constituted by a member having flexibility. With such a configuration, even when an external force is applied to battery pack 100, spacer member 40 can reduce the external force and protect battery holder 5.

Spacer member 40 is preferably provided on cell end surface 1b on which the gas discharge valve is not provided, among cell end surfaces of the plurality of secondary battery cells 1. If spacer member 40 is provided on cell end surface 1a provided with the gas discharge valve, when high-temperature, high-pressure gas is discharged from the gas discharge valve, gas discharge may be inhibited by spacer member 40, the gas may not be smoothly discharged to the outside, and the internal pressure of the outer can may increase and the outer can may burst. Therefore, by arranging spacer member 40 while avoiding cell end surface 1a provided with the gas discharge valve, even if high-temperature, high-pressure gas is discharged from the gas discharge valve, it is possible to avoid a situation in which spacer member 40 inhibits release of the gas, and to maintain smooth release of the gas while adding spacer member 40 to battery holder 5.

Spacer member 40 is fixed to the side surface of battery holder 5 by an adhesive layer. Double-sided tape can be used as the adhesive layer. Spacer member 40 may also be fixed with an adhesive or the like.

Spacer member 40 is preferably fixed to the side surface of battery holder 5 along guide wall 7. Accordingly, guide wall 7 for positioning lead plate 50 can also be used for positioning spacer member 40.

Spacer member 40 continuously covers cell end surfaces of a plurality of continuous secondary battery cells 1 in a state in which a plurality of secondary battery cells 1 are arranged such that cell end surfaces are coplanar. Therefore, spacer member 40 is formed according to a pattern in which the plurality of secondary battery cells 1 are stacked. For example, as shown in FIGS. 11 to 12, spacer member 40 is formed in a wave shape in plan view.

In addition, as shown in FIGS. 11 to 12, a plurality of spacer members 40 are fixed on side surfaces of battery cells while being separated from each other. Furthermore, spacer members 40 preferably have a common shape on respective side surfaces of battery holder 5. In addition, spacer members 40 on the respective side surfaces are preferably mirror-symmetrical. Accordingly, by reversing spacer member 40, common spacer members 40 can be used on the left and right, and the number of parts required when assembling battery pack 100 can be reduced.

Further, spacer member 40 is extended on a side surface of battery holder 5 so as to cover continuous cell end surfaces. In addition, a space is formed between spacer member 40 and an end portion of the side surface of battery holder 5. With such a configuration, the side surface of battery holder 5 is not completely partitioned by spacer member 40, and a space is formed. Accordingly, in the unlikely event that gas is discharged from the gas discharge valve, it is possible to avoid a situation in which gas discharged along the side surface of battery holder 5 is dammed by spacer member 40, and to maintain smooth release of the gas while adding spacer member 40 to battery holder 5.

Furthermore, spacer member 40 protects inner bag 20. Spacer member 40 is formed in a continuous linear shape so as to cover continuous cell end surfaces on the side surface of battery holder 5. However, it is preferable that a cell end surface located at a terminal end is not covered with spacer member 40. Accordingly, while battery holder 5 is housed in inner bag 20 for waterproofing, by not covering the cell end surface located at the terminal end, it is possible to avoid a situation in which an excessive load is applied to inner bag 20 and inner bag 20 is broken.

Protective sheet 30 is configured to cover cell end surface 1a provided with a gas discharge valve. In this manner, by using protective sheet 30 for covering battery holder 5 to improve impact resistance and the like, and by covering cell end surface 1a provided with a gas discharge valve, even if high-temperature, high-pressure gas is discharged from the gas discharge valve of any one of secondary battery cells 1, it is possible to prevent the gas from being immediately discharged from the battery pack, and to avoid a situation in which a flame caused by ignition of the gas directly leaks to the outside of the battery pack.

In general, a battery pack is configured such that, when some abnormality occurs in any one of secondary battery cells housed in an outer case and high-pressure gas is generated inside an outer can thereof, a gas discharge valve provided in the outer can is opened. At this time, a structure for safely discharging the high-pressure gas released into the outer case from the outer case to the outside is required.

However, it has not been easy to realize such a structure. In particular, in recent years, reduction in size and weight has been required for battery packs, while cost reduction has also been required, and it has not been easy to secure necessary space and cost for adding a structure for safely discharging gas. In contrast, in the present embodiment, an advantage is obtained in that protective sheet 30 for improving impact resistance can also be used as a member that suppresses occurrence of flame leakage while securing gas discharge space GS.

### (First opening 31)

Further, protective sheet 30 has a plurality of first openings 31. From first openings 31, as shown in FIG. 7, some of the plurality of cell end surfaces 1b not provided with the gas discharge valve are respectively exposed from protective sheet 30. Accordingly, when high-temperature, high-pressure gas is discharged from the gas discharge valve of any one of secondary battery cells 1, the gas is not directly discharged from cell end surface 1a provided with the gas discharge valve, but is discharged after being moved to the position of another cell end surface 1b not provided with the gas discharge valve, that is, to the position where first opening 31 is provided. Therefore, it can be expected that a gas movement path is lengthened, the force and temperature of the gas are weakened, and the gas is more safely discharged to the outside.

In addition, first openings 31 respectively expose, from protective sheet 30, a plurality of cell end surfaces 1b not provided with spacer members 40, among the plurality of cell end surfaces 1b not provided with a gas discharge valve. In FIG. 7, spacer members 40 provided inside inner bag 20 are indicated by broken lines. With such a configuration, cell end surfaces 1a provided with a gas discharge valve are closed with protective sheet 30 to suppress occurrence of flame leakage, while both regulation and discharge of gas can be achieved.

Spacer member 40 is formed thicker than protective sheet 30 in order to form gas discharge space GS. On the other hand, protective sheet 30 is formed thin, whereby protective sheet 30 can be easily attached to the surface of inner bag 20 and battery module 2 is prevented from becoming thick.

### (Second opening 32)

In addition, protective sheet 30 has a plurality of second openings 32 formed along a boundary between the main surface and a side surface continuous with the main surface, as shown in FIG. 8. Accordingly, protective sheet 30, which is constituted by an elastic member and is difficult to bend, can be easily bent as shown in FIG. 9 by forming the plurality of second openings 32 separated along a boundary line between the main surface and the side surface.

Each second opening 32 is preferably formed to be smaller than each first opening 31. Accordingly, the area of each first opening 31 mainly responsible for gas discharge is increased, and gas discharge can be smoothly performed.

### (Third opening 33)

Further, protective sheet 30 preferably has a plurality of third openings 33 formed at a position corresponding to check valve 22 of inner bag 20, as shown in FIG. 8. Accordingly, gas generated inside inner bag 20 can be discharged to the outside through check valve 22 and third openings 33.

Each third opening 33 is preferably opened smaller than each second opening 32. Accordingly, an area of first opening 31 for urgently discharging suddenly generated gas is made larger than an area of each third opening 33 for discharging a relatively small amount of gas, and gas discharge can be smoothly performed.

In the above example, an example in which the battery pack is used as a power source for an electric scooter has been described. However, the present disclosure is not limited thereto, and the battery pack can also be used for other applications in which the battery pack is attached to an electric device that is an object to be driven and supplies power to the electric device. Examples of the electric device include a moving body such as an electric vehicle or an electric cart, and a portable electric device. In such an electric device, when a remaining capacity of the battery pack becomes small or when the battery pack undergoes age-related deterioration, the battery pack can be replaced and the electric device can be continuously used. However, the present disclosure is not limited to a battery pack mainly of a replaceable type housing secondary battery cells, and can also be applied to an aspect in which secondary battery cells are housed in a housing of an electric device. In the present disclosure, it is sufficient that the battery pack houses secondary battery cells in a case, and the term battery pack also includes a configuration in which secondary battery cells for driving are built into a housing of an electric device itself. That is, the present disclosure is not limited to a replaceable battery pack, and can also be applied to an electric device including built-in secondary battery cells.

### INDUSTRIAL APPLICABILITY

The battery pack, the lead plate for a battery pack, and the method for manufacturing a battery pack according to the present invention can be suitably used as a drive power source for a moving body such as an electric scooter, an electric cart, or a power-assisted bicycle, as a power source for a wireless device, as a power source for a portable electric device such as an electric cleaner or an electric tool, as a backup power source for a server or the like, and as a stationary power storage device for household use, office use, factory use, or the like.

### REFERENCE MARKS IN THE DRAWINGS

100 battery pack
1 secondary battery cell
1a cell end surface provided with a gas discharge valve
1b cell end surface not provided with a gas discharge valve
2 battery module
3 circuit board
4 board holder
5 battery holder
5a sub-holder
6 accommodation tube
7 guide wall
8 overall negative terminal
9 overall positive terminal
10 outer case
11 upper case
12 lower case
13 gas discharge port
20 inner bag
22 check valve
30 protective sheet
31 first opening
32 second opening
33 third opening
40 spacer member
50, 50B, 50C lead plate
51, 51B, 51C first lead plate
52 second lead plate
53 third lead plate
54 lead body
55, 55B, 55C bending line
56 output portion
57 connection hole
58 recess
60, 60B, 60C, 64 bead portion
61, 61B, 61C body-side bead
62, 62B, 62C output-side bead
70 cell connection portion
72 fuse link
74 second bending line
76 intermediate connection portion
77 third lead body
78 third bending line
79 fuse connection portion
80 current fuse portion
GS gas discharge space

## Claims

1. A battery pack, comprising:
a plurality of secondary battery cells;
one or more first lead plates configured to connect the plurality of secondary battery cells at least in series or in parallel;
a circuit board connected to the one or more first lead plates; and
an outer case housing the circuit board and a battery block in which the plurality of secondary battery cells are connected to each other by the one or more first lead plates,
wherein each of the one or more first lead plates includes:
a lead body extending in one direction; and
an output portion bent along a bending line at an edge of the lead body,
and
the each of the one or more first lead plates includes one or more bead portions, discontinuous across the bending line between the lead body and the output portion, being arranged in the lead body and the output portion along the one direction.

2. The battery pack according to claim 1, wherein
each of the one or more bead portions includes:
a body-side bead located in the lead body, and
an output-side bead located in the output portion,
the body-side bead and the output-side bead are separated at the bending line and are arranged linearly.

3. The battery pack according to claim 1, wherein
the one or more bead portions include a pair of bead portions, the pair of bead portions arranged in parallel along the one direction.

4. The battery pack according to claim 1, wherein
the each of the one or more first lead plates includes a recess spanning the lead body and the output portion, the recess being located along the bending line.

5. The battery pack according to claim 1, wherein
the each of the one or more first lead plates further includes a cell connection portion connected to the lead body via a second bending line, and the cell connection portion is connected to corresponding secondary battery cells among the plurality of secondary battery cells, and
the lead body and the cell connection portion are bent in advance via the second bending line.

6. The battery pack according to claim 5, wherein
an extension line of the bending line and an extension line of the second bending line intersect each other.

7. The battery pack according to claim 1, wherein
the battery block includes:
a battery holder accommodating the plurality of secondary battery cells and
a board holder holding the circuit board, and
the output portion is connected to an overall positive terminal or an overall negative terminal of the battery block on the board holder.

8. The battery pack according to claim 7, further comprising:
one or more second lead plates mechanically connected to cell end surfaces of corresponding secondary battery among the plurality of secondary battery cells, each of the one or more second lead plates not including the output portion.

9. The battery pack according to claim 8, further comprising:
a third lead plate not including the output portion; and
a current fuse portion connected to the third lead plate,
wherein the board holder is installed on the battery holder,
the current fuse portion includes a first end connected to the third lead plate and fixed to the battery holder, and a second end fixed to the board holder, and
the third lead plate is connected to an overall negative terminal or an overall positive terminal of the battery block on the board holder.

10. The battery pack according to any one of claims 1 to 9, further comprising:
a waterproof inner bag housing the battery block.

11. A lead plate for a battery pack, the lead plate being for connecting a plurality of secondary battery cells, the lead plate comprising:
a lead body extending in one direction; and
an output portion formed integrally with the lead body via a bending line at an edge of the lead body,
wherein one or more bead portions, discontinuous across the bending line between the lead body and the output portion, being arranged along the one direction.

12. A method for manufacturing a battery pack,
the battery pack includes a plurality of secondary battery cells, one or more first lead plates configured to connect the plurality of secondary battery cells in series or in parallel, a circuit board connected to the one or more first lead plates, and an outer case housing the circuit board and a battery block in which the plurality of secondary battery cells are connected by the one or more first lead plates, the method comprising:
forming the battery block by connecting the plurality of secondary battery cells with the one or more first lead plates, each of the one or more first lead plates including:
a lead body extending in one direction; and
an output portion formed integrally with the lead body via a bending line at an edge of the lead body,
wherein, in the each of the one or more first lead plates, the lead body and the output portion include one or more bead portions that are discontinuous across the bending line and formed along the one direction of the lead body and the output portion;
placing the circuit board on one surface of the battery block in a state in which the output portion extends in a planar shape from the lead body from the one surface of the battery block; and
bending the output portion at the bending line and connecting the output portion to the circuit board.

13. The method for manufacturing a battery pack according to claim 12,
wherein, in forming the battery block, the each of the one or more first lead plates further includes a cell connection portion connected to the lead body via a second bending line and connected to the plurality of secondary battery cells, and
the lead body and the cell connection portion are bent in advance via the second bending line.
